# EUROPÄISCHE PATENTSCHRIFT

(11) **EP 3 625 089 B1**
(45) Veröffentlichungstag und Bekanntmachung des Hinweises auf die Patenterteilung: **12.01.2022**
(21) Anmeldenummer: 18724809.1
(22) Anmeldetag: 07.05.2018
(51) Int. Cl.: B60R 21/205

(54) **BEFESTIGEN EINES AIRBAGS IM FAHRZEUG**
FITTING AN AIRBAG IN A MOTOR VEHICLE
FIXATION D'UN AIRBAG DANS UN VÉHICULE AUTOMOBILE

(30) Priorität: 16.05.2017 DE 102017208230
(43) Veröffentlichungstag der Anmeldung: 25.03.2020
(73) Patentinhaber: Audi AG, 85045 Ingolstadt (DE)
(72) Erfinder: WUNDERLICH, Matthias, 85053 Ingolstadt (DE); OLES, Christof, 85101 Lenting (DE)
(86) Internationale Anmeldenummer: PCT/EP2018/061685
(87) Internationale Veröffentlichungsnummer: WO 2018/210601

(56) Entgegenhaltungen:
- DE-A1-102016 101 207
- FR-A1- 2 970 921
- US-A1- 2003 080 540

## Beschreibung

Die vorliegende Erfindung betrifft eine Vorrichtung zum Herrichten eines Instrumententrägers. Darüber hinaus betrifft die Erfindung ein Verfahren zum Befestigen eines Airbags an dem Instrumententräger und ein Fahrzeug mit einem entsprechenden Instrumententräger.

In modernen Fahrzeugen findet sich heutzutage üblicherweise eine Vielzahl von Sicherheitseinrichtungen. Eine solche Sicherheitseinrichtung ist z.B. ein Beifahrerairbag. Beifahrerairbags werden üblicherweise unterhalb einer Abdeckung an einem Instrumententräger befestigt. Damit im Fall eines Gefahrenfalls bzw. eines Unfalls der Beifahrerairbag seine vorgesehene Funktion erfüllen kann und sich in den Fahrgastraum öffnet, ist in der Abdeckung ein geschwächter Bereich, bspw. eine perforierte Struktur, vorgehalten.

Zur Führung des Airbags bzw. eines Luftsacks des Airbags ist eine Führungsvorrichtung vorgesehen. Diese ist zusammen mit einem Airbag-Modul, das den eigentlichen Airbag enthält, an dem Instrumententräger angeschweißt.

Für einen sicheren Halt während eines Gefahrenfalls bzw. eines Unfalls, wird üblicherweise auch eine mechanische Verbindung der Führungsvorrichtung bzw. des Airbag-Moduls an dem Instrumententräger vorgesehen.

Die DE 102 41 598 A1 offenbart eine Armaturentafel, bei der an einer Vorderfläche eines Trichters eine Vielzahl von Schweißstegen zum Vibrationsschweißen mit einer Innenfläche eines Grundbauteils vorgesehen ist. Ein Airbag-Modul wird über eine Anzahl von an dem Trichter angeformten Vorsprüngen mit Befestigungselementen an dem Trichter befestigt. Der Trichter ist somit lediglich über eine Schweißverbindung mit dem Grundbauteil verbunden und das Airbag-Modul ist nur mit dem Trichter verbunden.

Die DE 10 2012 206 210 A1 offenbart ein Aktivpolster, bei dem eine Basiswand eine breite Rippe aufweist, die von einer ersten Fläche kontinuierlich entlang eines geschlossenen Umfangs vorragt. Eine weitere, "vordere Wand" genannte Wand weist mehrere schmale Rippen auf, die konzentrisch von einer zweiten Fläche kontinuierlich entlang dem geschlossenen Umfang vorragen. Jede schmale Rippe soll an die breite Rippe geschweißt sein.

Die EP 2 080 675 B1 offenbart eine Airbagverstaueinrichtung, die an einer Instrumententafel anzubringen ist. Die Einrichtung weist ein Klappenteil, das sich so erstreckt, dass es einem oberen Plattenteil gegenüberliegt, und eine Mehrzahl von Verbindungsrippen auf, die von dem Klappenteil aufgerichtet sind. Das Klappenteil soll an Enden der Mehrzahl von Verbindungsrippen integral an das obere Plattenteil vibrationsgeschweißt sein.

Die US 2010/0078920 A1 offenbart eine Airbagtür, die eine Schweißfläche aufweist, die mit einer Innenfläche einer Armaturentafel über Vibrationsschweißen zu verbinden ist, wobei an der Schweißfläche eine Vielzahl von Schweißrippen in einer Vibrationsschweißrichtung und eine Brückenrippe quer zu den Schweißrippen angeordnet sind.

Eine mechanische Verbindung ist bei den zuletzt genannten Druckschriften nicht vorgesehen.

US 2003/080540 A1 offenbart eine Instrumententafel für einen Automobil-Fahrgastraum, die ein Substrat mit einer Innenfläche und einer Außenfläche aufweist und einen vorgeschwächten Umriss, der innerhalb der Innenfläche gebildet ist und eine Klappe innerhalb des Substrats definiert. Eine Rutsche ist an der Innenfläche angebracht und weist eine Vorderfläche mit einer Öffnung darin auf, wobei sich die Vorderfläche um die Öffnung erstreckt. Eine Stützklappe mit einem Scharnierabschnitt und einem Klappenabschnitt, der Öffnungen aufweist, ist an der Rutsche angebracht. Der Scharnierabschnitt ist an der Rutsche angebracht und der Klappenabschnitt ist schwenkbar an dem Scharnierabschnitt angebracht. Eine Innentürverkleidung wird durch Vibrationsschweißen durch die Öffnungen innerhalb des Klappenabschnitts an der Klappe befestigt. Auf der Rutsche ist ein Airbag-Modul montiert.

Aufgabe der vorliegenden Erfindung ist es somit wenigstens einige der Nachteile des Stands der Technik zu adressieren. Insbesondere soll eine Vorrichtung bereitgestellt werden, die ein sicheres Befestigen eines Airbags in einem Fahrzeug ermöglicht. Zumindest soll zu bekannten Lösungen wenigstens eine Alternative vorgeschlagen werden.

Erfindungsgemäß wird die Aufgabe gelöst durch eine Vorrichtung zum Herrichten eines Instrumententrägers gemäß dem unabhängigen Patentanspruch 1, sowie durch ein Verfahren gemäß dem unabhängigen Patentanspruch 3 und ein Fahrzeug gemäß dem unabhängigen Patentanspruch 4. Weitere jeweilige Ausgestaltungen gehen aus den abhängigen Patentansprüchen und der Beschreibung hervor.

Die Erfindung schlägt eine Vorrichtung zum Herrichten zumindest eines Abschnitts eines Instrumententrägers vor, umfassend eine Gussform, die mindestens zwei Kerne zum Ausbilden von mindestens zwei Befestigungskonsolen und Mittel zum Ausbilden von ununterbrochenen Verschweißungsmitteln umfasst, wobei die mindestens zwei Kerne jeweils eine Öffnungsseite aufweisen, so dass nach einem Gießverfahren die mindestens zwei Kerne durch ein Aufeinander-zu-Bewegen aus der Gussform entnehmbar sind, wodurch die mindestens zwei Kerne jeweils eine Kammer in den mindestens zwei Befestigungskonsolen definieren, die jeweils eine Öffnung aufweisen, so dass die Öffnungen zueinander weisen. Dadurch können die Kerne nach innen entnommen werden, so dass um die Befestigungskonsolen umlaufende, ununterbrochene Verschweißungsmittel ermöglicht werden, wie vorstehend bereits beschrieben. Bspw. kann der Instrumententräger einschließlich der beiden Aufnahmen mit einem Kunststoff-Spritzgussverfahren hergestellt werden. Hierbei ist es unerheblich, ob der Instrumententräger als Kunststoffbauteil aus physikalischem oder chemisch aufgeschäumtem Material oder aus Kompaktschaummaterial hergestellt wird. Die zum Ausbilden der Aufnahmen bzw. Befestigungskonsolen notwendigen Kerne können dabei nicht in der Hauptentformungsrichtung entformt werden, sondern lediglich seitlich dazu, wozu Werkzeugschieber verwendet werden. Durch Ausbilden der Öffnungen zueinander, können die Werkzeugschieber nach innen, also aufeinander zu bewegt werden, wodurch die Verschweißungsmittel umlaufend und ununterbrochen um die Aufnahmen verlaufen können.

Eine Ausgestaltung der Vorrichtung ist dadurch gekennzeichnet, dass die mindestens zwei Kerne jeweils mindestens eine jeweilige Ausnehmung aufweisen, die dazu eingerichtet ist, mindestens eine Versteifungsrippe in der Kammer der jeweiligen Befestigungskonsole auszubilden. Die dadurch auszubildende mindestens eine Versteifungsrippe versteift die Befestigungskonsole, so dass die Befestigungskonsole sich im Falle eines Unfalls nicht verformt.

Darüber hinaus schlägt die Erfindung ein Verfahren zum Verbinden eines Airbag-Moduls umfassend eine Airbag-Aufnahme mit einem Instrumententräger eines Fahrzeugs vor. Das Verfahren umfasst mindestens die Schritte:
- Herstellen zumindest eines Teils des Instrumententrägers mittels eines Gießverfahrens unter Verwendung einer Vorrichtung nach einer vorstehend beschriebenen Ausführungsform, wobei an dem Instrumententräger mindestens zwei Befestigungskonsolen ausgebildet sind, die zueinander und gegenüberliegend ausgerichtet sind,
- Entfernen von jeweiligen Gusskernen aus den jeweiligen Befestigungskonsolen zum Ausbilden jeweiliger Öffnungen in den Befestigungskonsolen, wobei das Entfernen durch ein Aufeinander-zu-Bewegen der jeweiligen Gusskerne aus den Befestigungskonsolen erfolgt,
- Herstellen einer Airbag-Aufnahme und eines Airbag-Trägers,
- Verschweißen der Airbag-Aufnahme mit dem Instrumententräger, und
- Befestigen des Airbag-Trägers an der Airbag-Aufnahme und den Befestigungskonsolen mittels Befestigungsmitteln, wodurch das Airbag-Modul mit dem Instrumententräger verbunden wird.

Schließlich wird ein Fahrzeug mit einem Instrumententräger zur Aufnahme eines Airbag-Moduls mit einer Airbag-Aufnahme vorgeschlagen, wobei der Instrumententräger mindestens zwei Befestigungskonsolen und mehrere, einen Verbindungsbereich des Instrumententrägers definierende, umlaufende Verschweißungsrippen aufweist, wobei die mindestens zwei Befestigungskonsolen zueinander und gegenüberliegend ausgerichtet sind und jeweils eine zueinander weisende Öffnung aufweisen, und einer Kombination einer Befestigungsvorrichtung zum Befestigen eines Airbag-Moduls mit einer Airbag-Aufnahme, eines Airbag-Moduls mit einer Airbag-Aufnahme, und des Instrumententrägers, wobei die Befestigungsvorrichtung dazu konfiguriert ist, zwischen Airbag-Modul und Instrumententräger mindestens eine mechanische Verbindung und mindestens eine Schweißverbindung auszubilden, und wobei der Instrumententräger mindestens einen Vorsprung und einen von dem Vorsprung abstehenden Flansch aufweist, die eine Kammer begrenzen und eine Befestigungskonsole für die mechanische Verbindung des Airbag-Moduls mit dem Instrumententräger ausbilden, und der Instrumententräger und die Airbag-Aufnahme Verschweißungsmittel für die Schweißverbindung zwischen der Airbag-Aufnahme des Airbag-Moduls und dem Instrumententräger aufweisen, wobei das Airbag-Modul unter Verwendung eines Verfahrens zum Verbinden des Airbag-Moduls nach einer vorstehend beschriebenen

Ausführungsform in dem Fahrzeug befestigt ist.

In einer Ausführungsform des Fahrzeugs weist der Instrumententräger mindestens zwei jeweilige daran ausgebildete Befestigungskonsolen auf, die jeweils mindestens eine Befestigungsbohrung aufweisen, und die Airbag-Aufnahme, die zwischen dem Instrumententräger und einem Airbag-Träger anzuordnen ist, weist jeweilige Verbindungsbohrungen auf, die mit der jeweiligen mindestens einen Befestigungsbohrung der mindestens zwei Befestigungskonsolen korrespondieren, wobei die jeweiligen Befestigungsbohrungen und Verbindungsbohrungen dazu eingerichtet sind, ein jeweiliges Befestigungsmittel aufzunehmen, das mit den Befestigungsbohrungen und Verbindungsbohrungen zusammenwirkt und dazu eingerichtet ist, den Airbag-Träger an den mindestens zwei Befestigungskonsolen und der Airbag-Aufnahme zu befestigen und mit dem Instrumententräger zu verbinden.

In einer Ausführungsform des Fahrzeugs sind die Befestigungskonsolen gegenüberliegend an einem Randbereich der Befestigungsvorrichtung angeordnet und die jeweiligen Kammern der Befestigungskonsolen weisen jeweils eine Öffnung auf, die zueinander ausgerichtet angeordnet sind.

In einer Ausführungsform des Fahrzeugs umfassen die Verschweißungsmittel mehrere jeweilige Verschweißungsrippen an dem Instrumententräger und der Airbag-Aufnahme, die miteinander verschweißbar sind.

In einer Ausführungsform des Fahrzeugs sind die jeweiligen Verschweißungsrippen jeweils ununterbrochen umlaufend um die Befestigungskonsolen angeordnet.

In einer Ausführungsform des Fahrzeugs sind jeweils vier Verschweißungsrippen an dem Instrumententräger und der Airbag-Aufnahme ausgebildet, die konzentrisch um die Befestigungskonsolen herumlaufen.

In einer Ausführungsform des Fahrzeugs sind des Weiteren Verschweißungsrippen in einem Zwischenraum zwischen den Befestigungskonsolen an dem Instrumententräger und der Airbag-Aufnahme angeordnet.

In einer Ausführungsform des Fahrzeugs weisen die jeweiligen Befestigungskonsolen jeweils mindestens eine Versteifungsrippe auf.

Weitere Vorteile und Ausgestaltungen der Erfindung ergeben sich aus der Beschreibung und den beiliegenden Zeichnungen. Die Erfindung ist anhand von Ausführungsformen in den Zeichnungen schematisch dargestellt und wird unter Bezugnahme auf die begleitenden Zeichnungen schematisch und ausführlich beschrieben, wobei in den Figuren gleiche Elemente mit gleichen Bezugszeichen versehen sind.
Fig. 1 zeigt eine Draufsicht auf eine Ausführungsform eines Instrumententrägers.
Fig. 2 zeigt eine perspektivische Ansicht einer Ausführungsform eines Instrumententrägers.
Fig. 3 zeigt eine perspektivische Ansicht einer Ausführungsform einer Kombination eines Instrumententrägers mit einer Airbag-Aufnahme.
Fig. 4 zeigt eine Schnittansicht einer Ausführungsform einer Kombination eines Instrumententrägers mit einer Airbag-Aufnahme.

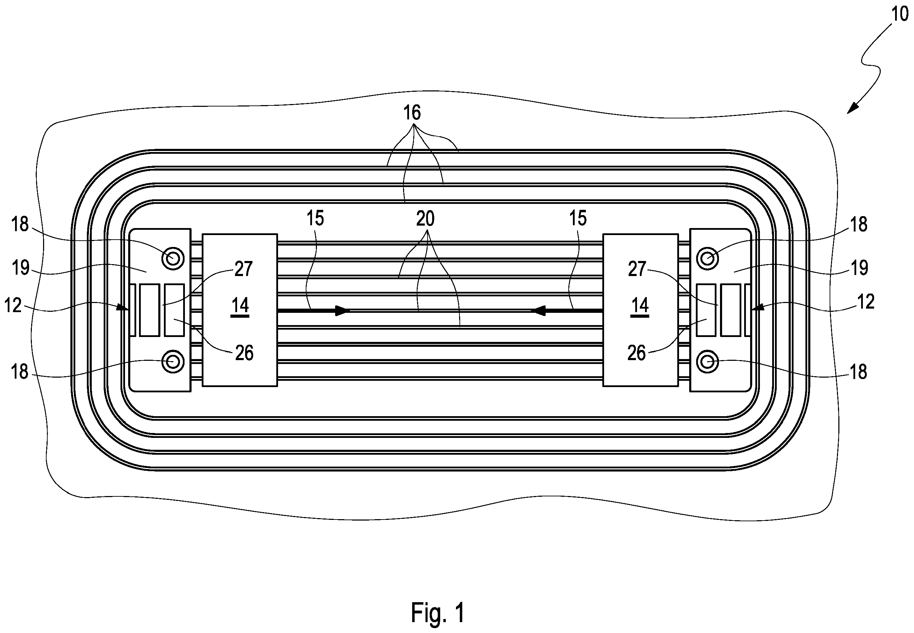

Der in Figur 1 abschnittsweise gezeigte Instrumententräger 10 ist in einem Spritzgussverfahren hergestellt und weist zwei Befestigungskonsolen 12 auf. Die zwei Befestigungskonsolen 12 sind an dem Instrumententräger 10 ausgebildet, indem Kerne bzw. Schieber 14 nach dem Herstellungsverfahren entnommen werden. Die Schieber 14 sind jedoch so angeordnet, dass die jeweiligen Entformungsrichtungen 15 der Schieber 14 aufeinander gerichtet sind. Die Schieber 14 werden folglich dadurch entnommen, dass sie aufeinander zu bewegt werden.

Der Abschnitt des Instrumententrägers 10 weißt ebenfalls vier Verschweißungsrippen 16 auf. Dadurch, dass die Schieber 14 aufeinander zu nach innen entnommen werden, können die Verschweißungsrippen 16 ununterbrochen und umlaufend um die Befestigungskonsolen 12 ausgebildet und angeordnet sein. Die Verbindungswirkung einer Schweißverbindung, wie sie nachfolgend beschrieben wird, wird dadurch erheblich erhöht. Die Verschweißungsrippen 16 begrenzen den Verbindungsbereich der Befestigungsvorrichtung.

Darüber hinaus weisen die Befestigungskonsolen 12 jeweils zwei Befestigungsbohrungen 18 auf. Die Befestigungsbohrungen 18 sind in einem Flansch 19 der Befestigungskonsole 12 ausgebildet. Zusätzlich weist der Instrumententräger 10 weitere Verschweißungsrippen 20 in einem Bereich zwischen den Befestigungskonsolen 12 auf.

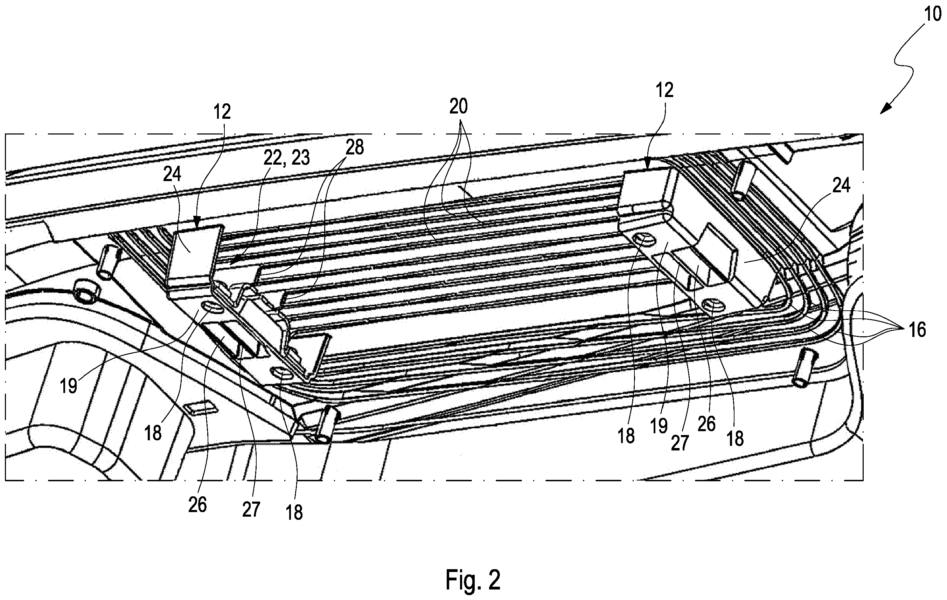

Figur 2 zeigt eine Ausführungsform des Instrumententrägers 10 in perspektivischer Ansicht, in der eine jeweilige Öffnung 22 in der Befestigungskonsole 12 erkennbar ist. Die Befestigungskonsole 12 ist gebildet und begrenzt durch einen Vorsprung 24, der von dem Instrumententräger 10 abragt, und dem Flansch 19, der an dem Vorsprung 24 ausgebildet ist. Der Vorsprung 24 und der Flansch 19 begrenzen somit eine Kammer 23. Die jeweilige Kammer 23 bzw. Öffnung 22 der jeweiligen Befestigungskonsolen 12, sind zueinander ausgerichtet bzw. weisen zueinander.

In dem Flansch 19 sind jeweils Ausnehmungen 26 ausgebildet, wobei eine Rippe 27 in der Ausnehmung verblieben ist. In dem Flansch 19 sind jeweils die Befestigungsbohrungen 18 angeordnet. Weiterhin sind in der Kammer 23 der Befestigungskonsolen 12 jeweils zwei Versteifungsrippen 28 angeordnet.

Um die Befestigungskonsolen 12 herum sind weiterhin Verschweißungsrippen 16 ausgebildet, die ununterbrochen um die Befestigungskonsolen 12 herumlaufen. Auch in dem Bereich zwischen den Befestigungskonsolen 12 sind mehrere Verschweißungsrippen 20 ausgebildet.

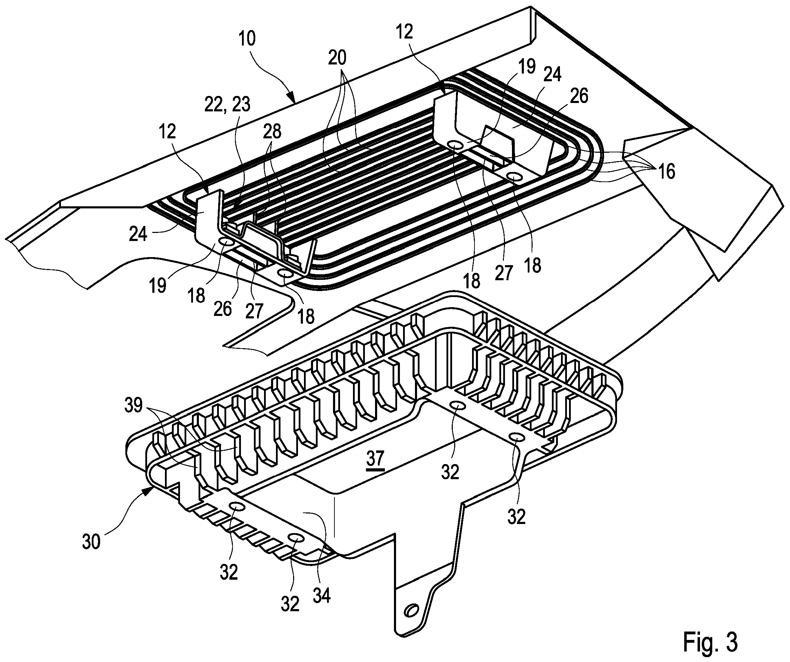

Figur 3 zeigt einen Instrumententräger 10 zusammen mit einer Airbag-Aufnahme 30. Die Befestigungskonsolen 12 des Instrumententrägers 10 weisen wieder die Öffnung 22 bzw. Kammer 23 auf, die zwei Versteifungsrippen 28 aufweist. Des Weiteren weisen die Befestigungskonsolen 12 die Befestigungsbohrungen 18 auf. Um die Befestigungskonsolen 12 sind umlaufend und ununterbrochen Verschweißungsrippen 16 angeordnet. Auch in dem Bereich zwischen den Befestigungskonsolen 12 sind Verschweißungsrippen 20 angeordnet.

Die Airbag-Aufnahme 30 weist entsprechende Verbindungsbohrungen 32 auf. Die Verbindungsbohrungen 32 korrespondieren in ihrer Größe und Ausrichtung mit den Befestigungsbohrungen 18 der Befestigungskonsolen 12 des Instrumententrägers 10. Die Airbag-Aufnahme 30 weist weiterhin eine Wand 34 auf, die die Öffnung 22 bzw. Kammer 23 der Befestigungskonsolen 12 abdeckt. Die Wand 34 ist dazu ausgebildet, dem Airbag bzw. dem Luftsack des Airbags eine Führung zu bieten und den Luftsack aufzunehmen. Die Wand 34 begrenzt einen Innenbereich 37 der Airbag-Aufnahme 30. Die Wand 34 wird von Versteifungsrippen 39 unterstützt.

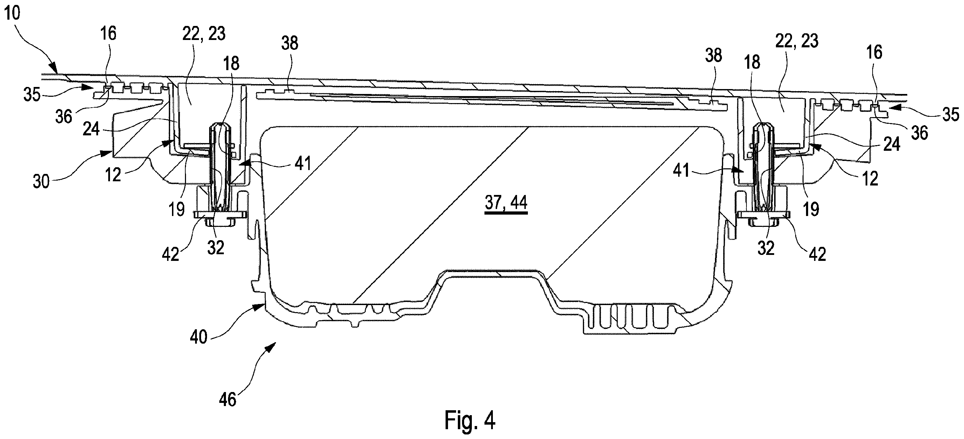

Die Airbag-Aufnahme 30 wird mit dem Instrumententräger 10 über eine Schweißverbindung 35 verschweißt, wie in Figur 4 gezeigt ist. Dazu weist die Airbag-Aufnahme 30 jeweilige Verschweißungsrippen 36 auf, die mit den Verschweißungsrippen 16 des Instrumententrägers 10 korrespondieren. Zusätzlich weist die Airbag-Aufnahme 30 weitere Verschweißungsrippen 38 auf, die mit den in der Figur 4 nicht zu sehenden Verschweißungsrippen 20 des Instrumententrägers 10 korrespondieren. Die Verschweißungsrippen 16, 36 sowie 20, 38 bilden jeweils eigene Verschweißungszonen aus. Dadurch, dass die Verschweißungsrippen 16 und 36 umlaufend sind, bildet sich eine besonders homogene Verschweißungszone im Randbereich der Befestigungsvorrichtung aus. Als Schweißverfahren kommen insbesondere Reibschweißen, Ultraschallschweißen und Infrarotschweißen in Betracht. Dadurch können hohe Kräfte und Momente besonders gut aufgenommen werden.

An die Airbag-Aufnahme 30 und den Instrumententräger 10 wird ein Airbag-Träger 40 über eine mechanische Verbindung 41 angebunden. Dazu wird in die korrespondierenden Bohrungen, nämlich in die Befestigungsbohrungen 18 und in die Verbindungsbohrungen 32, ein Befestigungsmittel 42 eingeführt. Das Befestigungsmittel 42 kann eine Schraube, eine Niete oder dergleichen sein. Das Befestigungsmittel 42 ragt in die Kammer 23 der Befestigungskonsole 12 hinein und ist darin verankert. Der Airbag-Träger 40 trägt den eigentlichen Airbag 44. Die Airbag-Aufnahme 30 und der Airbag-Träger 40 bilden zusammen mit dem Airbag 44 ein Airbag-Modul 46. Das Airbag-Modul 46 ist somit über die Schweißverbindung 35 und die mechanische Verbindung 41 mit dem Instrumententräger 10 verbunden.

## Patentansprüche

1. Vorrichtung zum Herrichten zumindest eines Abschnitts eines Instrumententrägers (10), umfassend eine Gussform, die mindestens zwei Kerne (14) zum Ausbilden von mindestens zwei Befestigungskonsolen (12) und Mittel zum Ausbilden von ununterbrochenen Verschweißungsmitteln (16, 20) umfasst, wobei die mindestens zwei Kerne (14) jeweils eine Öffnungsseite aufweisen, so dass nach einem Gießverfahren die mindestens zwei Kerne (14) durch ein Aufeinander-zu-Bewegen aus der Gussform entnehmbar sind, wodurch die mindestens zwei Kerne (14) jeweils eine Kammer (23) in den mindestens zwei Befestigungskonsolen definieren, die jeweils eine Öffnung (22) aufweisen, so dass die Öffnungen (22) zueinander weisen.

2. Vorrichtung nach Anspruch 1, **dadurch gekennzeichnet, dass** die mindestens zwei Kerne (14) jeweils mindestens eine Ausnehmung aufweisen, die dazu eingerichtet ist, mindestens eine Versteifungsrippe (28) in der Kammer (23) der Befestigungskonsole (12) auszubilden.

3. Verfahren zum Verbinden eines Airbag-Moduls (46) umfassend eine Airbag-Aufnahme (30) mit einem Instrumententräger (10) eines Fahrzeugs, umfassend mindestens die Schritte:
- Herstellen zumindest eines Teils des Instrumententrägers (10) mittels eines Gießverfahrens unter Verwendung einer Vorrichtung nach Anspruch 1 oder 2, wobei an dem Instrumententräger (10) mindestens zwei Befestigungskonsolen (12) ausgebildet werden, die zueinander und gegenüberliegend ausgerichtet sind,
- Entfernen von jeweiligen Gusskernen (14) aus den jeweiligen Befestigungskonsolen (12) zum Ausbilden jeweiliger Öffnungen (22) in den Befestigungskonsolen (12), wobei das Entfernen durch ein Aufeinander-zu-Bewegen der jeweiligen Gusskerne (14) aus den Befestigungskonsolen (12) erfolgt,
- Herstellen einer Airbag-Aufnahme (30) und eines Airbag-Trägers (40) eines Airbag-Moduls (46),
- Verschweißen der Airbag-Aufnahme (30) mit dem Instrumententräger (10), und
- Befestigen des Airbag-Trägers (46) an der Airbag-Aufnahme (30) und den Befestigungskonsolen (12) mittels Befestigungsmitteln (42), wodurch das Airbag-Modul (46) mit dem Instrumententräger (10) verbunden wird.

4. Fahrzeug mit einem Instrumententräger (10) zur Aufnahme eines Airbag-Moduls (46) mit einer Airbag-Aufnahme (30), wobei der Instrumententräger (10) mindestens zwei Befestigungskonsolen (12) und mehrere, einen Verbindungsbereich des Instrumententrägers (10) definierende, umlaufende Verschweißungsrippen (16) aufweist, wobei die mindestens zwei Befestigungskonsolen (12) zueinander und gegenüberliegend ausgerichtet sind und jeweils eine zueinander weisende Öffnung (22) aufweisen, und einer Kombination einer Befestigungsvorrichtung zum Befestigen eines Airbag-Moduls (46) mit einer Airbag-Aufnahme (30), eines Airbag-Moduls (46) mit einer Airbag-Aufnahme (30), und des Instrumententrägers (10), wobei die Befestigungsvorrichtung dazu konfiguriert ist, zwischen Airbag-Modul (46) und Instrumententräger (10) mindestens eine mechanische Verbindung (41) und mindestens eine Schweißverbindung (35) auszubilden, und wobei der Instrumententräger (10) mindestens einen Vorsprung (24) und einen von dem Vorsprung (24) abstehenden Flansch (19) aufweist, die eine Kammer (23) begrenzen und eine Befestigungskonsole (12) für die mechanische Verbindung (41) des Airbag-Moduls (46) mit dem Instrumententräger (10) ausbilden, und der Instrumententräger (10) und die Airbag-Aufnahme (30) Verschweißungsmittel (16, 36) für die Schweißverbindung (35) zwischen der Airbag-Aufnahme (30) des Airbag-Moduls (46) und dem Instrumententräger (10) aufweisen, und wobei das Airbag-Modul (46) unter Verwendung eines Verfahrens nach Anspruch 3 in dem Fahrzeug befestigt ist.

5. Fahrzeug nach Anspruch 4, **dadurch gekennzeichnet, dass** der Instrumententräger (10) mindestens zwei jeweilige daran ausgebildete Befestigungskonsolen (12) aufweist, die jeweils mindestens eine Befestigungsbohrung (18) aufweisen, und die Airbag-Aufnahme (30), die zwischen dem Instrumententräger (10) und einem Airbag-Träger (40) anzuordnen ist, jeweilige Verbindungsbohrungen (32) aufweist, die mit der jeweiligen mindestens einen Befestigungsbohrung (18) der mindestens zwei Befestigungskonsolen (12) korrespondieren, wobei die jeweiligen Befestigungsbohrungen (18) und Verbindungsbohrungen (32) dazu eingerichtet sind, ein jeweiliges Befestigungsmittel (42) aufzunehmen, das mit den Befestigungsbohrungen (18) und Verbindungsbohrungen (32) zusammenwirkt und dazu eingerichtet ist, den Airbag-Träger (40) an den mindestens zwei Befestigungskonsolen (12) und der Airbag-Aufnahme (30) zu befestigen und mit dem Instrumententräger (10) zu verbinden.

6. Fahrzeug nach Anspruch 4 oder 5, **dadurch gekennzeichnet, dass** die Befestigungskonsolen (12) gegenüberliegend an einem Randbereich der Befestigungsvorrichtung angeordnet sind und die jeweiligen Kammern (23) der Befestigungskonsolen (12) jeweils eine Öffnung (22) aufweisen, die zueinander ausgerichtet angeordnet sind.

7. Fahrzeug nach einem der Ansprüche 4 bis 6, **dadurch gekennzeichnet, dass** die Verschweißungsmittel (16, 20, 36, 38) mehrere jeweilige Verschweißungsrippen an dem Instrumententräger (10) und der Airbag-Aufnahme (30) umfassen, die miteinander verschweißbar sind.

8. Fahrzeug nach Anspruch 7, **dadurch gekennzeichnet, dass** die jeweiligen Verschweißungsrippen (16, 36) jeweils ununterbrochen umlaufend um die Befestigungskonsolen (12) angeordnet sind.

9. Fahrzeug nach Anspruch 8, **dadurch gekennzeichnet, dass** jeweils vier Verschweißungsrippen (16, 36) an dem Instrumententräger (10) und der Airbag-Aufnahme (30) ausgebildet sind, die konzentrisch um die Befestigungskonsolen (12) herumlaufen.

10. Fahrzeug nach einem der Ansprüche 7 bis 9, **dadurch gekennzeichnet, dass** des Weiteren Verschweißungsrippen (20, 38) in einem Zwischenraum zwischen den Befestigungskonsolen (12) an dem Instrumententräger (10) und der Airbag-Aufnahme (30) angeordnet sind.

11. Fahrzeug nach einem der Ansprüche 4 bis 10, **dadurch gekennzeichnet, dass** die jeweiligen Befestigungskonsolen (12) jeweils mindestens eine Versteifungsrippe (28) aufweisen.

## Claims

1. Device for preparing at least a portion of an instrument carrier (10), comprising a casting mould, which comprises at least two cores (14) for forming at least two mounting brackets (12) and means for forming continuous welding means (16, 20), wherein the at least two cores (14) each have an opening side, so that after a casting process the at least two cores (14) can be removed from the casting mould by moving towards one another, whereby the at least two cores (14) each define a chamber (23) in the at least two mounting brackets, which each have an opening (22) so that the openings (22) face one another.

2. Device according to claim 1, **characterised in that** the at least two cores (14) each have at least one recess which is configured to form at least one reinforcing rib (28) in the chamber (23) of the mounting bracket (12).

3. Method for connecting an airbag module (46) comprising an airbag holder (30) to an instrument carrier (10) of a vehicle, comprising at least the steps:
- producing at least a part of the instrument carrier (10) by means of a casting process by using a device according to claim 1 or 2, wherein at least two mounting brackets (12) are formed on the instrument carrier (10) which are aligned relative to and opposite one another,
- removing the respective casting cores (14) from the respective mounting brackets (12) to form respective openings (22) in the mounting brackets (12), wherein the removal is performed by moving the respective casting cores (14) towards one another out of the mounting brackets (12),
- producing an airbag holder (30) and an airbag carrier (40) of an airbag module (46),
- welding the airbag holder (30) to the instrument carrier (10), and
- fastening the airbag carrier (46) onto the airbag holder (30) and the mounting brackets (12) by fastening means (42), whereby the airbag module (46) is connected to the instrument carrier (10).

4. Vehicle having an instrument carrier (10) for mounting an airbag module (46) with an airbag holder (30), wherein the instrument carrier (10) has at least two mounting brackets (12) and a plurality of circumferential welding ribs (16) defining a connecting region of the instrument carrier (10), wherein the at least two mounting brackets (12) are aligned relative to and opposite one another and each have an opening (22) facing one another, and a combination of a fastening device for fastening an airbag module (46) with an airbag holder (30), an airbag module (46) with an airbag holder (30),
and the instrument carrier (10), wherein the fastening device is configured to form between the airbag module (46) and instrument carrier (10) at least one mechanical connection (41) and at least one welding connection (35), and wherein the instrument carrier (10) has at least one projection (24) and a flange (19) protruding from the projection (24), which delimit a chamber (23) and form a mounting bracket (12) for the mechanical connection (41) of the airbag module (46) to the instrument carrier (10), and the instrument carrier (10) and the airbag holder (30) have welding means (16, 36) for the welding connection (35) between the airbag holder (30) of the airbag module (46) and the instrument carrier (10), and wherein the airbag nodule (46) is fixed into the vehicle using a method according to claim 3.

5. Vehicle according to claim 4, **characterised in that** the instrument carrier (10) has at least two mounting brackets (12) formed respectively thereon which each have at least one fastening bore (18), and the airbag holder (30), which is to be arranged between the instrument carrier (10) and an airbag carrier (40), has respective connecting bores (32), which correspond with the respective at least one fastening bore (18) of the at least two mounting brackets (12), wherein the respective fastening bores (18) and connecting bores (32) are configured to mount a respective fastening means (42) which cooperates with the fastening bores (18) and connecting bores (32) and is configured to fix the airbag carrier (40) on the at least two mounting brackets (12) and the airbag holder (30) and connect to the instrument carrier (10).

6. Vehicle according to claim 4 or 5, **characterised in that** the mounting brackets (12) are arranged opposite one another in an edge section of the fastening device and the respective chambers (23) of the mounting brackets (12) each have an opening (22) which are arranged in alignment with one another.

7. Vehicle according to any of claims 4 to 6, **characterised in that** the welding means (16, 20, 36, 38) comprise a plurality of respective welding ribs on the instrument carrier (10) and the airbag holder (30), which can be welded to one another.

8. Vehicle according to claim 7, **characterised in that** the respective welding ribs (16, 36) are arranged continuously around the mounting brackets (12).

9. Vehicle according to claim 8, **characterised in that** four welding ribs (16, 36) are formed respectively on the instrument carrier (10) and the airbag holder (30), which run concentrically around the mounting brackets (12).

10. Vehicle according to any of claims 7 to 9, **characterised in that** in addition reinforcing ribs (20, 38) are arranged in an intermediate space between the mounting brackets (12) on the instrument carrier (10) and the airbag holder (30).

11. Vehicle according to any of claims 4 to 10, **characterised in that** the respective mounting brackets (12) each have at least one reinforcing rib (28).

## Revendications

1. Dispositif de préparation au moins d'une section d'un tableau de bord (10), comprenant un moule qui comprend au moins deux noyaux (14) pour la réalisation d'au moins deux consoles de fixation (12) et des moyens pour la réalisation de moyens de soudage (16, 20) ininterrompus, dans lequel les au moins deux noyaux (14) présentent respectivement un côté d'ouverture de sorte qu'après un procédé de coulée les au moins deux noyaux (14) puissent être retirés du moule par un rapprochement l'un de l'autre, par quoi les au moins deux noyaux (14) définissent respectivement une chambre (23) dans les au moins deux consoles de fixation qui présentent respectivement une ouverture (22) de sorte que les ouvertures (22) soient tournées l'une vers l'autre.

2. Dispositif selon la revendication 1, **caractérisé en ce que** les au moins deux noyaux (14) présentent respectivement au moins un évidement qui est conçu afin de réaliser au moins une nervure de renforcement (28) dans la chambre (23) de la console de fixation (12).

3. Procédé de liaison d'un module de coussin gonflable (46) comprenant un logement de coussin gonflable (30) avec un tableau de bord (10) d'un véhicule, comprenant au moins les étapes :
- la fabrication d'au moins une partie du tableau de bord (10) au moyen d'un procédé de coulée en utilisant un dispositif selon la revendication 1 ou 2, dans lequel au moins deux consoles de fixation (12) sont réalisées au niveau du tableau de bord (10), lesquelles sont orientées l'une par rapport à l'autre et à l'opposé,
- le retrait de noyaux (14) respectifs des consoles de fixation (12) respectives pour la réalisation d'ouvertures (22) respectives dans les consoles de fixation (12), dans lequel le retrait des consoles de fixation (12) est effectué par un rapprochement l'un de l'autre des noyaux (14) respectifs,
- la fabrication d'un logement de coussin gonflable (30) et d'un support de coussin gonflable (40) d'un module de coussin gonflable (46),
- le soudage du logement de coussin gonflable (30) avec le tableau de bord (10), et
- la fixation du support de coussin gonflable (46) au logement de coussin gonflable (30) et aux consoles de fixation (12) à l'aide de moyens de fixation (42), par lesquels le module de coussin gonflable (46) est relié au tableau de bord (10).

4. Véhicule avec un tableau de bord (10) pour la réception d'un module de coussin gonflable (46) avec un logement de coussin gonflable (30), dans lequel le tableau de bord (10) présente au moins deux consoles de fixation (12) et plusieurs nervures de soudage (16) périphériques, définissant une zone de liaison du tableau de bord (10), dans lequel les au moins deux consoles de liaison (12) sont orientées l'une par rapport à l'autre et à l'opposé et présentent respectivement une ouverture (22) tournée l'une vers l'autre, et une combinaison d'un dispositif de fixation pour la fixation d'un module de coussin gonflable (46) avec un logement de coussin gonflable (30), d'un module de coussin gonflable (46) avec un logement de coussin gonflable (30), et du tableau de bord (10), dans lequel le dispositif de fixation est configuré afin de réaliser entre le module de coussin gonflable (46) et le tableau de bord (10) au moins une liaison mécanique (41) et au moins une liaison soudée (35), et dans lequel le tableau de bord (10) présente au moins une saillie (24) et une bride (19) dépassant de la saillie (24) qui délimitent une chambre (23) et réalisent une console de fixation (12) pour la liaison mécanique (41) du module de coussin gonflable (46) avec le tableau de bord (10), et le tableau de bord (10) et le logement de coussin gonflable (30) présentent des moyens de soudage (16, 36) pour la liaison soudée (35) entre le logement de coussin gonflable (30) du module de coussin gonflable (46) et le tableau de bord (10), et dans lequel le module de coussin gonflable (46) est fixé en utilisant un procédé selon la revendication 3 dans le véhicule.

5. Véhicule selon la revendication 4, **caractérisé en ce que** le tableau de bord (10) présente au moins deux consoles de fixation (12) respectives réalisées sur celui-ci qui présentent respectivement au moins un perçage de fixation (18), et le logement de coussin gonflable (30) qui est à agencer entre le tableau de bord (10) et un support de coussin gonflable (40), présente des perçages de liaison (32) respectifs qui correspondent avec l'au moins un perçage de fixation (18) respectif à au moins deux consoles de fixation (12), dans lequel les perçages de fixation (18) et perçages de liaison (32) respectifs sont conçus afin de recevoir un moyen de fixation (42) respectif qui coopère avec les perçages de fixation (18) et perçages de liaison (32) et est conçu afin de fixer le support de coussin gonflable (40) aux au moins deux consoles de fixation (12) et au logement de coussin gonflable (30) et de le relier au tableau de bord (10).

6. Véhicule selon la revendication 4 ou 5, **caractérisé en ce que** les consoles de fixation (12) sont agencées à l'opposé au niveau d'une zone de bord du dispositif de fixation et les chambres respectives (23) des consoles de fixation (12) présentent respectivement une ouverture (22) qui sont agencées en étant orientées l'une par rapport à l'autre.

7. Véhicule selon l'une quelconque des revendications 4 à 6, **caractérisé en ce que** les moyens de soudage (16, 20, 36, 38) comprennent plusieurs nervures de soudage respectives au niveau du tableau de bord (10) et du logement de coussin gonflable (30) qui peuvent être soudées les unes aux autres.

8. Véhicule selon la revendication 7, **caractérisé en ce que** les nervures de soudage (16, 36) respectives sont agencées respectivement de manière ininterrompue sur la périphérie autour des consoles de fixation (12).

9. Véhicule selon la revendication 8, **caractérisé en ce que** respectivement quatre nervures de soudage (16, 36) sont réalisées au niveau du tableau de bord (10) et du logement de coussin gonflable (30), qui s'étendent de manière concentrique autour des consoles de fixation (12).

10. Véhicule selon l'une quelconque des revendications 7 à 9, **caractérisé en ce qu'**en outre des nervures de soudage (20, 38) sont agencées dans un espace intermédiaire entre les consoles de fixation (12) au niveau du tableau de bord (10) et du logement de coussin gonflable (30).

11. Véhicule selon l'une quelconque des revendications 4 à 10, **caractérisé en ce que** les consoles de fixation (12) respectives présentent respectivement au moins une nervure de renforcement (28).
